# EUROPEAN PATENT APPLICATION

(11) **EP 4 223 465 A1**
(43) Date of publication of application: **09.08.2023**
(21) Application number: 21875881.1
(22) Date of filing: 01.10.2021
(51) Int. Cl.: B25J 13/00, B05B 12/00, B25J 9/22

(54) **ROBOT SYSTEM AND CONTROL METHOD FOR ROBOT SYSTEM**

(30) Priority: 02.10.2020 JP 2020167845
(71) Applicant: KAWASAKI JUKOGYO KABUSHIKI KAISHA, Kobe-shi, Hyogo 650-8670 (JP)
(72) Inventor: ASATO, Tatsutoshi, Hyogo, 650-8670 (JP); ISODA, Hideki, Hyogo, 650-8670 (JP); KATSUBE, Masato, Hyogo, 650-8670 (JP)
(74) Representative: Müller-Boré & Partner Patentanwälte PartG mbB
(86) International application number: PCT/JP2021/036454
(87) International publication number: WO 2022/071585

(57) **Abstract**

A robot system 100 includes a robot (1) including an end effector (6), an operation unit (8), and a controller (3) which moves the end effector (6) based on operation of the operation unit (8) and causes the end effector (6) to perform processing to a to-be-processed surface of a workpiece in a contactless manner. When moving the end effector (6) based on the operation of the operation unit (8), the controller (3) performs at least either one of a first control in which a distance between the end effector (6) and a control to-be-processed surface, which is the to-be-processed surface of the workpiece or an imaginary to-be-processed surface of the workpiece, is constant, or a second control in which an angle of the end effector with respect to the control to-be-processed surface is constant.

## Description

### CROSS-REFERENCE TO RELATED APPLICATION

This application claims the priority to Japanese Patent Application No. 2020-167845 filed on October 2, 2020 with the Japan Patent Office, the entire contents of which are incorporated herein as a part of this application by reference.

### TECHNICAL FIELD

The present disclosure relates to a robot system and a method of controlling the robot system.

### BACKGROUND ART

Conventionally, it is known that a paint gun is attached to a robot to paint a to-be-painted object. For example, Patent Document 1 discloses a tire inner surface painting device, which paints, while maintaining a fixed distance between a paint gun attached to a robot and a to-be-painted surface of a tire, based on data of a target route of the paint gun which is set beforehand by teaching and the distance between the paint gun and the to-be-painted surface of the tire which is measured by a distance sensor.

### [Reference Document(s) of Conventional Art]

### [Patent Document]

[Patent Document 1] JP2015-047834A

### DESCRIPTION OF THE DISCLOSURE

The uniformity of the thickness of the paint film depends at least on a traveling path of the paint gun. Therefore, the traveling path of the paint gun is desirably determined, while observing a painting state of an actual workpiece. The uniformity includes the smallness of paint unevenness, for example.

However, in the tire inner surface painting device described above, the traveling path of the paint gun in a direction parallel to the to-be-painted surface is not determined in a state of actually painting by the paint gun while maintaining the distance between the paint gun and the to-be-painted surface of the tire, but it is set beforehand. Therefore, there is no guarantee that the actual painting state will be in a desirable state.

Further, in painting using the paint gun with the robot, it is possible to paint the to-be-painted surface at a fixed angle. However, also in this case, if the traveling path of the paint gun is not determined in the state of painting by the paint gun, there is no guarantee that the actual painting state will be in the desirable state.

These problems are common, also when processing a to-be-processed surface of a workpiece by using a robot in a contactless manner. Such a case includes processing for releasing a substance or energy for processing to the to-be-processed surface of the workpiece from an end effector, for example.

The present disclosure is made in order to solve the problems described above, and one purpose thereof is to provide a robot system and a method of controlling the robot system, which are capable of improving an actual processing state, when processing a to-be-processed surface of a workpiece in a contactless manner.

In order to solve the above problems, a robot system according to one mode of the present disclosure includes a robot including an end effector, an operation unit, and a controller which moves the end effector based on operation of the operation unit and causes the end effector to perform processing to a to-be-processed surface of a workpiece in a contactless manner. When moving the end effector based on the operation of the operation unit, the controller performs at least either one of a first control in which a distance between the end effector and a control to-be-processed surface, which is the to-be-processed surface of the workpiece or an imaginary to-be-processed surface of the workpiece, is constant, or a second control in which an angle of the end effector with respect to the control to-be-processed surface is constant.

Further, a method of controlling a robot system according to another mode of the present disclosure is a method of controlling a robot system including a robot including an end effector, and an operation unit, which includes moving the end effector based on operation of the operation unit, and causing the end effector to perform processing to a to-be-processed surface of a workpiece in a contactless manner, and performing, when moving the end effector, at least either one of a first control in which a distance between the end effector and a control to-be-processed surface, which is the to-be-processed surface of the workpiece or an imaginary to-be-processed surface of the workpiece, is constant, or a second control in which an angle of the end effector with respect to the control to-be-processed surface is constant.

### [Effect of the Disclosure]

The present disclosure achieves an effect of improving an actual processing state, when processing a to-be-processed surface of a workpiece in a contactless manner.

### BRIEF DESCRIPTION OF DRAWINGS

Fig. 1 is a schematic diagram illustrating one example of a configuration of a painting robot system according to Embodiment 1 of the present disclosure.
Fig. 2 is a plan view schematically illustrating an arrangement of a robot and a position/posture sensor of Fig. 1.
Fig. 3 is a functional block diagram illustrating one example of a configuration of a control system of the painting robot system of Fig. 1.
Fig. 4 is a perspective view illustrating an outline of a fixed gun distance control.
Fig. 5 is a plan view illustrating an outline of a gun vertical-to-surface control.
Fig. 6 is a schematic diagram illustrating one example of a setup of CAD data of a workpiece in a robot coordinate system.
Fig. 7 is a flowchart illustrating one example of the contents of a specific control of a robot.
Fig. 8 is a flowchart illustrating one example of the contents of the fixed gun distance control of the robot.
Fig. 9 is a plan view illustrating a correction permitted position range related to the contents of the fixed gun distance control and the position of a paint gun.
Fig. 10 is a plan view illustrating a correction permitted angle range related to the direction of the paint gun.
Fig. 11 is a flowchart illustrating one example of the contents of the gun vertical-to-surface control of the robot.
Fig. 12 is a plan view illustrating one example of the contents of a specific control of Modification 1.
Fig. 13 is a plan view illustrating one example of the contents of a specific control of Embodiment 2.
Fig. 14 is a plan view illustrating one example of the contents of a specific control of Modification 2.

### MODES FOR CARRYING OUT THE DISCLOSURE

Hereinafter, concrete embodiments of the present disclosure will be described with reference to the drawings. Note that, below, the same reference characters are assigned to the same or corresponding elements throughout the drawings to omit redundant explanation. Further, since the following drawings are drawings for illustrating the present disclosure, the forms of mutually-corresponding elements may not be in agreement with each other among the drawings, when element(s) unrelated to the present disclosure is omitted, the dimension is not exact because of exaggeration, and/or the elements are simplified. Further, the present disclosure is not limited to the following embodiments.

### (Outline of Embodiment)

A robot system of one embodiment of the present disclosure includes a robot including an end effector, an operation unit, and a controller which moves the end effector based on operation of the operation unit and causes the end effector to perform processing of a to-be-processed surface of a workpiece in a contactless manner. When moving the end effector based on the operation of the operation unit, the controller performs, at least either one of a first control in which a distance between the end effector and a control to-be-processed surface, which is the to-be-processed surface of the workpiece or an imaginary to-be-processed surface of the workpiece, or a second control in which an angle of the end effector with respect to the control to-be-processed surface is constant. Here, as for the "constant angle" in the second control, an angle suitable for the processing by the end effector is selected. For example, 90° is selected for painting using a paint gun. Of course, other angles may be selected for other processings.

The operation unit includes a position/posture commander which indicates a position and a posture of the end effector, a position/posture detector which detects a position and a posture of the position/posture commander, and a processing commander for manipulating the processing.

Below, a mode in which the control to-be-processed surface in the first and second controls is an actual to-be-processed surface of the workpiece is described in Embodiment 1, and a mode in which the control to-be-processed surface in the first and second controls is the imaginary to-be-processed surface of the workpiece is described in Embodiment 2.

### (Embodiment 1)

### [Configuration]

### { Configuration of Hardware}

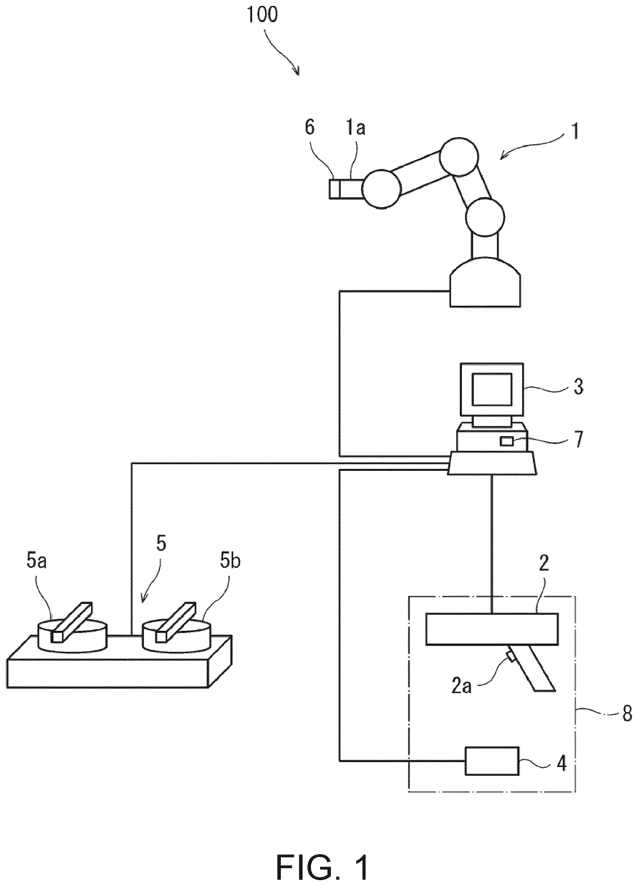

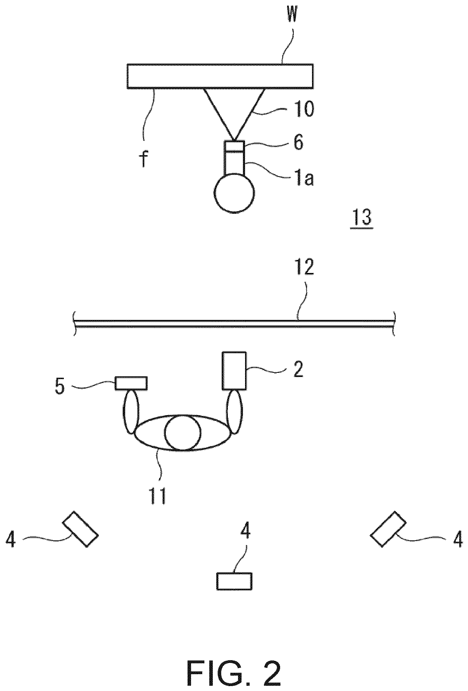

Fig. 1 is a schematic diagram illustrating one example of a configuration of a robot system according to Embodiment 1 of the present disclosure. Fig. 2 is a plan view schematically illustrating an arrangement of a robot 1 and a position/posture sensor 4 of Fig. 1.

Referring to Fig. 1, in Embodiment 1, the robot system is a painting robot system 100, for example. This painting robot system 100 includes the robot 1, an indicator 2 which is one example of the position/posture commander, a system controller 3 which is one example of the controller, the position/posture sensor 4 which is one example of the position/posture detector, a specific control switch 5, and a memory device 7 which is one example of a memory. A paint gun 6 which is one example of the end effector is attached to an EF attaching part 1a which is an end effector attaching part of the robot 1. The indicator 2 and the position/posture sensor 4 are included in an operation terminal 8 which is one example of the operation unit.

Here, the painting robot system 100 is one example of the robot system according to one embodiment of the present disclosure. In this robot system, processing by the end effector is processing by releasing of a substance or energy for processing from the end effector to the to-be-processed surface of the workpiece. Below, as the releasing which is the processing by releasing the substance or the energy for processing from the end effector to the to-be-processed surface of the workpiece, painting by injecting paint from the paint gun 6 is illustrated. However, the releasing may be other releasing processings. Further, by suitably applying the following disclosure of the painting by injecting the paint from the paint gun 6 to other releasing processings, the robot system which performs the releasing can be realized. This is because all the robot systems are common in the principle in which processing is achieved by releasing the substance or the energy from the end effector to the to-be-processed surface of the workpiece.

Here, the "substance or energy" for processing is not limited in particular. The "substance for processing" includes fluid, gas, solid such as powder or particulate, flame, etc. The "energy for processing" includes current, electromagnetic waves, light, sound wave, etc. The electromagnetic wave includes radio wave, radiation, etc. The light includes ultraviolet rays and infrared rays. The sound wave includes ultrasonic wave etc. The "processing" means causing at least a physical change or a chemical change in the to-be-processed surface. The physical change includes a change in the shape, a change in the hardness, a change in the color, a change in the characteristic, etc. of the to-be-processed surface. The change in the shape of the to-be-processed surface includes a formation of a recess, an exfoliation of the to-be-processed surface, a formation of a covering layer, and a melt deformation. The melt deformation includes welding. The change in the characteristic includes a change in the conductivity, a change in the magnetism, etc. The chemical change includes oxidization, reduction, combination, polymerization, decomposition, etc. The "release" of the substance or the energy includes radiation, injection, discharge, outflow, etc. of the substance or the energy.

Further, "a direction of the release of the substance or the energy from the end effector" is a main releasing direction of the substance or the energy, or an extending direction or a normal direction of the center line of a releasing port of the substance or the energy of the end effector, for example. Below, the paint gun 6 is "the end effector," the paint is the substance for processing, the injection of the paint is "the release of the substance," and the direction of injection of the paint from the paint gun 6 is "the direction of the release of the substance from the end effector." Below, "the direction of the injection of the paint from the paint gun 6" is referred to as "the direction of the paint gun 6" for simplification.

Further, below, "a fixed EF distance control" which is one example of the first control is referred to as "a fixed gun distance control," and "an EF vertical-to-surface control" which is one example of the second control is referred to as "a gun vertical-to-surface control."

Further, below, the operation terminal 8 is illustrated in which the commander which commands the position and the posture of the paint gun 6 and a sensor part which detects the commanded position and the posture of the paint gun 6 are divided as the indicator 2 and the position/posture sensor 4, respectively. However, an operation terminal 8 in which the commander and the sensor part are integrated may also be used.

Further, below, an operation terminal 8 is illustrated in which the processing commander for manipulating the processing by the end effector is a trigger 2a, and this trigger 2a is disposed on the indicator 2. However, the processing commander may be separated from the operation terminal 8. The processing commander may be displayed on a display of the system controller 3, for example.

Next, an arrangement of these elements is described. Referring to Fig. 2, the robot 1 and a workpiece W which is a to-be-painted object are disposed inside a sealed painting room 13, for example. Note that, in Fig. 2, in order to make the drawing legible, an EF attaching part 1a which is a wrist part is illustrated, instead of the robot 1. Reference character "10" indicates paint which is injected from the paint gun 6. One of side walls of the painting room 13 is constituted by a transparent partition board 12, and a control area is formed adjacent to this transparent partition board 12.

An operating position is set at a place in the control area, from which the workpiece W and the paint gun 6 are visible. The specific control switch 5 is disposed at this operating position, and the position/posture sensors 4 are disposed around the operating position. Here, the number of position/posture sensors 4 is three. An operator 11 is located at this operating position, and holds the indicator 2 in one hand, and operates or moves the indicator 2 in order to manipulate the paint gun 6, while looking at the workpiece W and the paint gun 6. Here, the one hand is the right hand, for example. The position and the posture of the indicator 2 are detected by the position/posture sensors 4. Further, the operator 11 operates the specific control switch 5 by the other hand to instruct at least either one of the fixed gun distance control or the gun vertical-to-surface control. Here, the other hand is the left hand, for example. Note that, below, the fixed gun distance control and the gun vertical-to-surface control are comprehensively referred to as "the specific control."

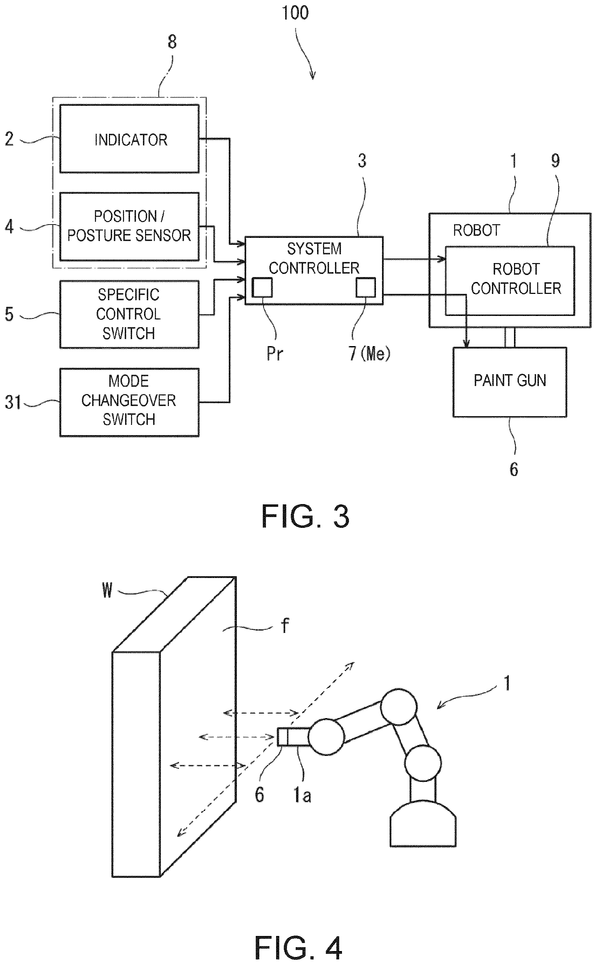

The system controller 3 is disposed at a suitable place other than the painting room 13, for example. The system controller 3 may be disposed close to the operating position in the control area, for example. Note that the system controller 3 may be downsized and may be integrated with a robot controller 9 illustrated in Fig. 3. In this case, the integrated system controller 3 may be disposed inside a pedestal of the robot 1.

The memory device 7 may be disposed at an arbitrary place. Here, it is disposed inside the system controller 3.

Below, these elements will be described in detail.

### <Robot 1>

The robot 1 is an element which moves the paint gun 6. Therefore, the robot 1 may be one to which the paint gun 6 can be attached. The robot 1 includes a vertical articulated robot, a horizontal articulated robot, a parallel link robot, and a rectangular coordinate robot.

Below, a case where the robot 1 is a 6-axis vertical articulated robot is illustrated. The paint gun 6 is attached to the EF attaching part 1a of the robot 1. The EF attaching part 1a is one example of the attaching part to which the paint gun 6 is attached. If the robot 1 is of other types, the name of the attaching part of the paint gun 6 may vary.

Since for the robot 1 the paint gun 6 is one of various kinds of end effectors which is attached to the EF attaching part 1a, the position and the posture of the paint gun 6 are controlled by controlling the position and the posture of the EF attaching part 1a which is the attaching part of the paint gun 6. Therefore, although the control of the position and the posture of the EF attaching part 1a will be described below, the control of the position and the posture of the EF attaching part 1a is synonymous with a control of the position and the posture of the paint gun 6. Further, "the direction of the EF attaching part 1a" is synonymous with a direction of the paint gun 6 which is attached to the EF attaching part 1a.

### <Indicator 2>

The indicator 2 is an element for indicating the position and the posture of the paint gun 6 and operating the injection of paint from the paint gun 6. Here, the indicator 2 is formed in a gun shape which is obtained by simplifying and imitating the shape of the paint gun 6. Thus, the position and the posture of the paint gun 6 can be indicated by the position and the posture of the indicator 2. However, the shape of the indicator 2 may not be the gun shape. For example, a marker may be disposed on the indicator 2 having an arbitrary shape, and the position and the posture of the indicator 2 may be identified by the position/posture sensor 4 detecting the marker.

Here, the indicator 2 includes the trigger 2a, in order to operate the injection of the paint from the paint gun 6. The trigger 2a is configured to be able to be pushed in, while being biased so that it returns to the original position. By the operator 11 pushing in the trigger 2a with a finger, the paint is injected from the paint gun 6. When the operator 11 releases the finger off the trigger 2a, the injection from the paint gun 6 is stopped. Further, an injecting amount of the paint fluctuates corresponding to the pushing-in amount of the trigger 2a. The injecting amount of the paint may be an injecting amount per unit time, for example.

### <System Controller 3>

The system controller 3 performs a basic control for controlling operation of the robot 1 so that the position and the posture of the paint gun 6 correspond to the position and the posture of the indicator 2 detected by the position/posture sensor 4, and controls the injection of the paint from the paint gun 6 corresponding to the operation of the indicator 2 related to the injection of the paint from the paint gun 6. Further, the system controller 3 performs, during the basic control, at least either one of the fixed gun distance control in which the distance between the paint gun 6 and a to-be-painted surface f of the workpiece W is constant, or the gun vertical-to-surface control in which the direction of paint gun 6 is perpendicular to the to-be-painted surface of the workpiece W. The to-be-painted surface f is one example of the to-be-processed surface.

In detail, the system controller 3 generates control signals for the robot 1 and the paint gun 6 based on position and posture data of the indicator 2 detected by the position/posture sensor 4, three-dimensional data of the workpiece W, and position data of the workpiece W, and transmits these data to the robot controller 9 illustrated in Fig. 3. The position and posture data mean position/posture signal.

The three-dimensional data of the workpiece W is stored beforehand in the memory device 7 of the system controller 3 illustrated in Fig. 3. The three-dimensional data of the workpiece W includes CAD data of the workpiece W, actual measurement data of the workpiece W, etc.

The system controller 3 includes a computing element including a processor Pr and a memory Me illustrated in Fig. 3. A mode changeover switch 31 of Fig. 3 is a functional block in this computing element, which is realized by the processor Pr executing a control program stored in the memory Me. In detail, this computing element includes a microcontroller, an MPU, an FPGA (Field Programmable Gate Array), or a PLC (Programmable Logic Controller), for example. The system controller 3 may include a sole computing element which performs a centralized control, or may include computing elements which perform a distributed control.

Here, the function of the element disclosed herein can be performed using circuitry or processing circuitry including a general-purpose processor a dedicate processor, an integrated circuit, an ASIC (Application Specific Integrated Circuits), a conventional circuit, and/or a combination thereof, which is configured or programmed so as to execute the disclosed function. Since the processor includes a transistor and other circuitry, it is considered to be the processing circuitry or the circuitry. In the present disclosure, "-er, -or (including the operation terminal, the memory device, and the computing element)" and "part, unit (including the memory and the controller)" are hardware which perform listed functions, or hardware which are programmed to perform the listed functions. The hardware may be hardware disclosed herein, or may be other known hardware which are programmed or configured to perform the listed functions. If the hardware is a processor considered to be a kind of the circuitry, "-er, -or (including the operation terminal, the memory device, and the computing element)" and "part, unit (including the memory and the controller)" are a combination of hardware and software, and the software is used for a configuration of the hardware and/or the processor.

### <Position/Posture Sensor 4>

The position/posture sensor 4 is an element which detects the position and the posture of the operation terminal. Therefore, the position/posture sensor 4 may be any sensor capable of detecting the position and the posture of the indicator 2.

The position/posture sensor 4 includes, for example, Type A in which distance sensors are combined, Type B in which a 3D camera which is one example of a stereo camera is used, Type C in which a depth camera is used, and Type D in which a 3-axis acceleration sensor, a gyro sensor, and a magnetic field sensor are combined.

According to Type A, the position and the posture of the indicator 2 can be acquired, for example, by analyzing a combination of distance data detected by infrared distance sensors.

According to Type B, the position and the posture of the indicator 2 can be acquired, for example, by analyzing images including depth information captured by one or more 3D cameras.

According to Type C, the position and the posture of the indicator 2 can be acquired, for example, by analyzing images with depth captured by one or more TOF cameras.

According to Type D, the position and the posture of the indicator 2 can be acquired by a 3-axis acceleration sensor attached to the indicator 2. Further, the position and the posture of the indicator 2 can be acquired with high accuracy, by attaching a gyro sensor and a magnetic field sensor to the indicator 2 in addition to the 3-axis acceleration sensor, and analyzing a combination of outputs from these sensors.

Here, Type B is used as the position/posture sensor 4. In this case, for example, a marker for identifying the position and the posture of the indicator 2 from the captured image of the 3D camera may be disposed on the indicator 2.

### <Specific Control Switch 5>

The specific control switch 5 includes a fixed gun distance switch 5a and a gun vertical-to-surface switch 5b. For example, when the fixed gun distance switch 5a is turned, a fixed gun distance control ON signal is outputted, and when the fixed gun distance switch 5a is turned back, the fixed gun distance control ON signal is terminated. Further, when the gun vertical-to-surface switch 5b is turned, a gun vertical-to-surface control ON signal is outputted, and when the gun vertical-to-surface switch 5b is turned back, the gun vertical-to-surface control ON signal is terminated.

### <Paint Gun 6>

The paint gun 6 is not limited in particular. Here, the paint gun 6 can change the injecting amount of the paint. The paint may be any one of fluid, gas, powder, and a mixture of one or more of these, for example.

### <Memory Device 7>

The memory device 7 stores the three-dimensional data of the workpiece W. Further, the memory device 7 stores, in a time-series manner, robot control signals and paint gun control signals which are to be outputted to the robot 1 and the paint gun 6, respectively, for the system controller 3 controlling the operation of the robot 1 and the injection of the paint from the paint gun 6. Here, the memory device 7 includes the memory Me which constitutes the system controller 3, and is built inside the system controller 3.

The memory device 7 may be disposed as an independent element outside the system controller 3. For example, the memory device 7 may include a teaching pendant.

### {Configuration of Control System}

Fig. 3 is a functional block diagram illustrating one example of a configuration of the control system of the painting robot system 100 of Fig. 1.

Referring to Fig. 3, the painting robot system 100 further includes the mode changeover switch 31. The mode changeover switch 31 is displayed on a display unit included in the system controller 3 illustrated in Fig. 1, for example. The mode changeover switch 31 outputs a mode changeover signal for changing between a record mode and a reproduction mode to the system controller 3.

The indicator 2 outputs an injection signal indicative of the injecting amount of the paint from the paint gun 6 corresponding to the pushing-in amount of the trigger 2a to the system controller 3.

The position/posture sensor 4 outputs a position/posture signal indicative of the detected position and posture of the indicator 2 to the system controller 3.

The specific control switch 5 outputs the fixed gun distance control ON signal and the gun vertical-to-surface control ON signal to the system controller 3 corresponding to the operation of the fixed gun distance switch 5a and the gun vertical-to-surface switch 5b, respectively.

The robot 1 includes the robot controller 9 which controls the operations of the robot 1 and the paint gun 6 according to the inputted robot control signal and paint gun control signal, respectively.

The system controller 3 outputs the robot control signal to the robot controller 9 of the robot 1 based on the position/posture signal inputted from the position/posture sensor 4 to control the position and the posture of the paint gun 6 via the operation of the robot 1.

Further, the system controller 3 outputs the paint gun control signal to the robot controller 9 of the robot 1 based on the injection signal inputted from the indicator 2 to control ON/OFF of the injection and the injecting amount of the paint from the paint gun 6 via the robot controller 9.

Further, while the system controller 3 performs the basic control of the operation of the robot 1, when the fixed gun distance control ON signal or the gun vertical-to-surface control ON signal is inputted from the specific control switch 5, it performs the fixed gun distance control or the gun vertical-to-surface control, that is, turns ON the fixed gun distance control or the gun vertical-to-surface control.

Further, when the mode changeover signal is inputted from the mode changeover switch 31, the system controller 3 changes from the record mode to the reproduction mode, or vice versa, in the operation of the robot 1. Then, in the record mode, the system controller 3 causes the memory device 7 to store the robot control signal and the paint gun control signal which are outputted by the system controller 3, in a time-series manner. Then, in the reproduction mode, the system controller 3 sequentially reads from the memory device 7 the robot control signal and the paint gun control signal which are stored in the time-series manner, and outputs them to the robot 1 and the paint gun 6.

### <Fixed Gun Distance Control>

Next, the fixed gun distance control is described. Fig. 4 is a perspective view illustrating an outline of the fixed gun distance control.

Referring to Fig. 4, in the fixed gun distance control, the operation of the robot 1 is controlled so that the EF attaching part 1a of the robot 1 maintains a certain distance from the to-be-painted surface f of the workpiece W. As a result of the EF attaching part 1a of the robot 1 being maintained at the fixed distance from the to-be-painted surface f of the workpiece W, the paint gun 6 is maintained at the fixed distance from the to-be-painted surface f of the workpiece W. On the other hand, the EF attaching part 1a of the robot 1 to which the paint gun 6 is attached is controlled so that, in a direction perpendicular to the direction of the EF attaching part 1a, it moves to a position corresponding to the position of the indicator 2. The fixed gun distance control is performed while the trigger 2a of the indicator 2 is pushed in.

### <Gun Vertical-to-surface Control>

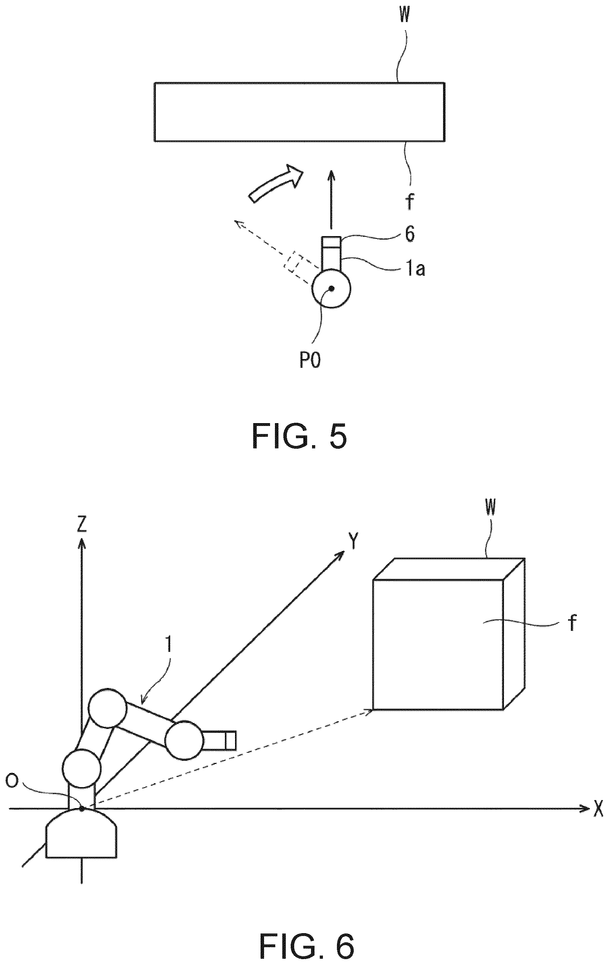

Next, the gun vertical-to-surface control is described. Fig. 5 is a plan view illustrating an outline of the gun vertical-to-surface control. In Fig. 5, broken lines of the EF attaching part 1a illustrate the posture of the paint gun 6 corresponding to the posture of the indicator 2, and solid lines illustrate the posture of the paint gun 6 which is gun vertical-to-surface controlled. The posture of the paint gun 6 corresponding to the posture of the indicator 2 means the posture in the basic control.

Referring to Fig. 5, in the gun vertical-to-surface control, the operation of the robot 1 is controlled so that the direction of the paint gun 6 becomes perpendicular to the to-be-painted surface f of the workpiece W. On the other hand, a position P0 of the EF attaching part 1a of the paint gun 6 is not restrained, and therefore, the paint gun 6 is movable in any directions. The gun vertical-to-surface control is performed while the trigger 2a of the indicator 2 is pushed in.

### <Setup of CAD Data of Workpiece W>

Fig. 6 is a schematic diagram illustrating one example of a setup in the robot coordinate system of the CAD data of the workpiece W.

Referring to Fig. 6, for example, the CAD data of the workpiece W is stored in the memory device 7 of the system controller 3 as the three-dimensional data of the workpiece W. In that case, coordinates of the workpiece W seen from the origin O are set in the coordinate system of the robot 1. The position of the workpiece W seen from the origin is actually measured, for example, by a measuring tape.

### [Operation]

Next, operation of the painting robot system 100 configured as described above is described. The operation of the painting robot system 100 means a method of controlling the painting robot system 100.

### {Record Mode}

First, the record mode is described. In the record mode, the system controller 3 causes the memory device 7 to store the robot control signal and the paint gun control signal which are outputted by the system controller 3, in a time-series manner, in operation which is described below.

### <Basic Control>

Referring to Figs. 2 and 3, the operator 11 first operates the mode changeover switch 31 displayed on the display unit of the system controller 3 to change the operation of the robot 1 into the record mode. Then, the operator 11 is located at the operating position, and holds the indicator 2 in one hand and moves the indicator 2 to operate the paint gun 6, while looking at the workpiece W and the paint gun 6. The position/posture sensor 4 detects the position and the posture of the indicator 2, and the system controller 3 controls the operation of the robot 1 according to the position/posture signal which is the detected signal so that the position and the posture of the EF attaching part 1a (as a result, the position and the posture of the paint gun 6) become the position and the posture corresponding to the position and the posture of the indicator 2.

Then, when the operator 11 pushes in the trigger 2a of the indicator 2 with his/her finger, the system controller 3 causes the paint gun 6 to inject paint 10 by an injecting amount corresponding to the injection signal from the indicator 2. The system controller 3 performs the following specific control, while the trigger 2a of the indicator 2 is pushed in.

### <Specific Control>

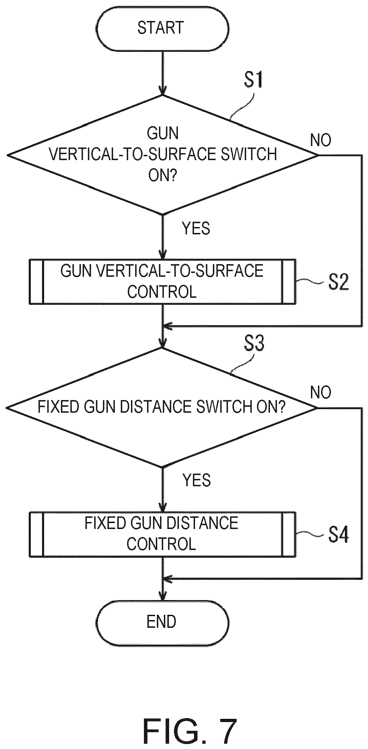

Fig. 7 is a flowchart illustrating one example of the contents of the specific control of the robot 1. Referring to Fig. 7, the system controller 3 performs the specific control in the basic control described above.

In the specific control, it first determines whether the gun vertical-to-surface switch 5b outputs the ON signal (Step S 1). If the gun vertical-to-surface switch 5b does not output the ON signal (NO at Step S 1), it transits to Step S3.

If the gun vertical-to-surface switch 5b outputs the ON signal (YES at Step S 1), it performs gun vertical-to-surface processing (gun vertical-to-surface control) (Step S2).

Next, the system controller 3 determines whether the fixed gun distance switch 5a outputs the ON signal (Step S3). If the fixed gun distance switch 5a does not output the ON signal (NO at Step S3), it ends this specific control.

If the fixed gun distance switch 5a outputs the ON signal (YES at Step S3), it performs fixed gun distance processing (fixed gun distance control) (Step S4).

Then, the system controller 3 ends this specific control.

The system controller 3 repeats this specific control at a given control interval.

### <Fixed Gun Distance Control>

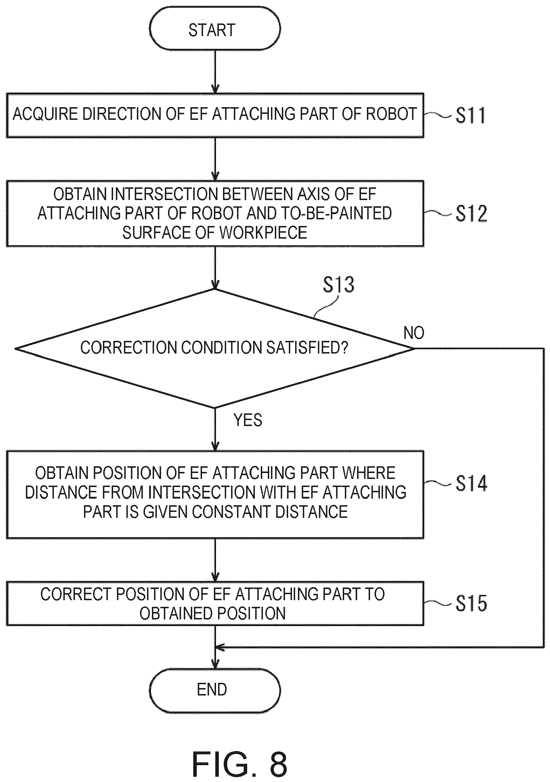

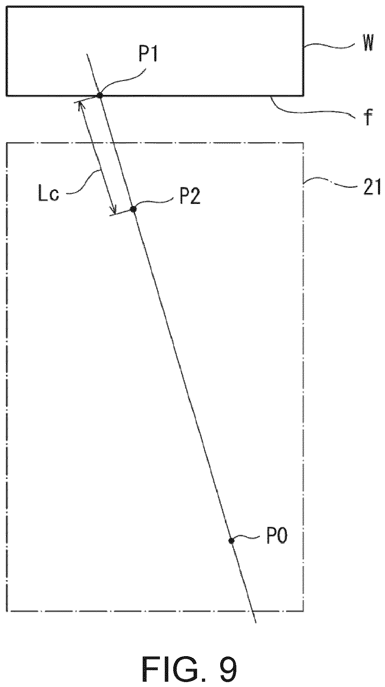

Fig. 8 is a flowchart illustrating one example of the contents of the fixed gun distance control of the robot 1. Fig. 9 is a plan view illustrating a correction permitted position range 21 related to the contents of the fixed gun distance control and the position of the paint gun 6. The fixed gun distance control of the robot 1 means the fixed gun distance processing of the robot 1.

Referring to Figs. 8 and 9, in the fixed gun distance control, the system controller 3 first acquires the position P0 and the direction of the EF attaching part 1a of the robot 1 from the position/posture signal inputted from the position/posture sensor 4 (Step S 11). Here, as described above, the direction of the EF attaching part 1a is in agreement with the direction of the paint gun 6 which is attached to the EF attaching part 1a. The direction of the paint gun 6 is defined suitably. For example, the direction of the paint gun 6 may be defined as the main releasing direction of the paint, the extending direction of the center line of the exhaust port of the paint, etc. The paint gun 6 which is the end effector is attached so that its direction is in agreement with the axis indicative of the direction of the end effector of the EF attaching part 1a. Here, the paint gun 6 is attached so that it is in agreement with the torsion axis of the EF attaching part 1a. Therefore, the direction of the EF attaching part 1a means the extending direction of the torsion axis of the EF attaching part 1a.

Next, the system controller 3 obtains a position of an intersection P1 between the torsion axis of the EF attaching part 1a and the to-be-painted surface f of the workpiece W (Step S12). Thus, the point P1 used as a reference of the to-be-painted surface f for the distance from the EF attaching part 1a is identified.

Next, the system controller 3 determines whether a correction condition is satisfied (Step S 13). Here, the "correction" refers to a change from a target position and a target posture of the paint gun 6 in the basic control into a target position and a target posture in the fixed gun distance control and the gun vertical-to-surface control which are the specific controls. If the paint gun 6 which is the end effector is located greatly away from the to-be-painted surface f of the workpiece W, or is directed greatly away from the to-be-painted surface f of the workpiece W, it is assumed that the operator 11 has no intention to perform the fixed gun distance control or the gun vertical-to-surface control. Thus, in this embodiment, in order to respect the intention of the operator 11, the correction is limited to when a given correction condition is satisfied.

The correction condition includes a correction condition related to the position of the paint gun 6, and a correction condition related to the posture of the paint gun 6.

Referring to Fig. 9, the correction permitted position range 21 related to the position of the EF attaching part 1a is set in the system controller 3. Here, "set" means store in the memory device 7. The correction permitted position range 21 is set suitably. Here, the correction permitted position range 21 is set as a three-dimensional range within a given distance range from the to-be-painted surface f of the workpiece W. The given distance range includes a given distance Lc. Here, the three-dimensional range has a rectangular parallelepiped shape. When the position P0 of the EF attaching part 1a acquired from the position/posture signal inputted from the position/posture sensor 4 is within the correction permitted position range 21, the system controller 3 determines that the correction condition related to the position of the EF attaching part 1a is satisfied.

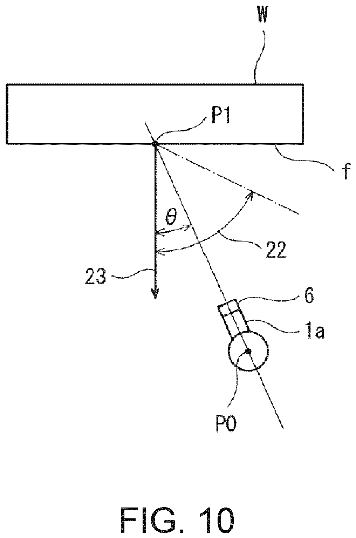

Fig. 10 is a plan view illustrating the correction permitted angle range related to the direction of the EF attaching part 1a. Referring to Fig. 10, a correction permitted angle range 22 related to the direction of the EF attaching part 1a is set in the system controller 3. The correction permission angle range 22 is set suitably. Here, the correction permitted angle range 22 is set as a conic range within a given angle range to a normal line 23 of the to-be-painted surface f of the workpiece W. The system controller 3 obtains an angle difference θ between a crossing angle of the rotation axis of the EF attaching part 1a with respect to the to-be-painted surface f at the intersection P1 of the to-be-painted surface f of the workpiece W and the normal line 23, and if the angle difference θ is within the correction permitted angle range, it determines that the correction condition related to the posture of the EF attaching part 1a is satisfied.

If the system controller 3 determines that the correction condition related to the position of the EF attaching part 1a and the correction condition related to the posture are satisfied, it determines that the correction condition is satisfied.

If the system controller 3 determines that the correction condition is not satisfied (NO at Step S 13), it ends the fixed gun distance control.

On the other hand, if the system controller 3 determines that the correction condition is satisfied (YES at Step S13), it obtains the position of a point P2 (hereinafter, referred to as "the constant distance point") which is separated from the intersection P1 on the rotation axis of the EF attaching part 1a by the given distance Lc (Step S14). The given distance Lc is a distance between the EF attaching part 1a and the to-be-painted surface f, which is used as a suitable distance for the paint gun 6 to paint the to-be-painted surface f, and is determined by experience of the operator 11, an experiment, a simulation, a calculation, etc.

Next, the system controller 3 moves the EF attaching part 1a to the constant distance point P2 (Step S15).

Then, the system controller 3 ends the fixed gun distance control.

### <Gun Vertical-to-surface Control>

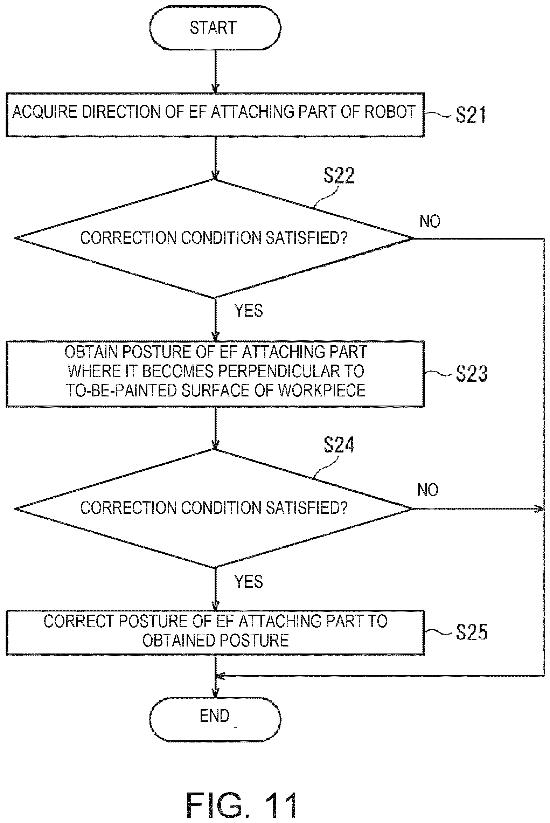

Fig. 11 is a flowchart illustrating one example of the contents of the gun vertical-to-surface control of the robot. The gun vertical-to-surface control means the gun vertical-to-surface processing.

Referring to Fig. 11, in the gun vertical-to-surface control, the system controller 3 first acquires the direction of the EF attaching part 1a from the position/posture signal inputted from the position/posture sensor 4, as the posture of the EF attaching part 1a of the robot 1 (Step S21).

Next, the system controller 3 determines whether the correction condition is satisfied (Step S22). Since this determination of whether the correction condition is satisfied is the same as in the case of the fixed gun distance control described above, the explanation is omitted.

If the system controller 3 determines that the correction condition is not satisfied (NO at Step S22), it ends the gun vertical-to-surface control.

On the other hand, if the system controller 3 determines that the correction condition is satisfied (YES at Step S22), it obtains the posture of the EF attaching part 1a in which it becomes perpendicular to the to-be-painted surface f of the workpiece W (Step S23). This processing can be performed suitably using the posture data of the EF attaching part 1a and the CAD data of the workpiece W. Here, for example, processing is performed as follows by using a normal line vector of the to-be-painted surface f of the workpiece W as an input. Note that, in the following processing, the vector [0 1 0] indicates a unit vector used as a reference.
A. Obtain a quaternion for turning the vector [0 1 0] to the direction of the EF attaching part 1a of the robot 1.
B. Convert the quaternion obtained by the A-processing into a rotation matrix.
C. Obtain a quaternion for turning the vector [0 1 0] to the normal line vector of the to-be-painted surface f.
D. Convert the quaternion obtained by the C-processing into a rotation matrix.
E. Obtain a conversion matrix for converting the rotation matrix obtained by the B-processing into the rotation matrix obtained by the D-processing.
F. Multiply the posture of the EF attaching part 1a of the robot 1 by the conversion matrix obtained by the E-processing so that the resultant becomes a vertical-to-surface posture which is the posture of the EF attaching part 1a of the robot 1 after the correction.

Next, the system controller 3 determines whether the correction condition is satisfied for the position and the posture of the EF attaching part 1a after the correction (Step S24). Since this determination of whether the correction condition is satisfied is the same as the case of the fixed gun distance control described above, the explanation is omitted.

If the system controller 3 determines that the correction condition is not satisfied (NO at Step S24), it ends the gun vertical-to-surface control.

On the other hand, if the system controller 3 determines that the correction condition is satisfied (YES at Step S24), it corrects the posture of the EF attaching part 1a to the vertical-to-surface posture obtained as described above (Step S25).

Then, the system controller 3 ends the gun vertical-to-surface control.

### {Reproduction Mode}

Referring to Figs. 2 and 3, the operator 11 operates the mode changeover switch 31 displayed on the display unit of the system controller 3 to change the operation of the robot 1 into the reproduction mode. Then, the system controller 3 sequentially reads, from the memory device 7, the robot control signals and the paint gun control signals which are stored in the time-series fashion, and outputs them to the robot 1 and the paint gun 6. Therefore, in the record mode, the painting work which has been performed by a skillful operator for one workpiece is automatically performed for a large number of workpieces of the same specification.

As described above, according to the painting robot system 100 of the embodiment, in the state where at least either one of the control to make the distance between the paint gun 6 and the to-be-painted surface f of the workpiece W constant, or the control to make the direction of the paint gun 6 perpendicular to the to-be-painted surface f of the workpiece W is performed, the traveling path of the paint gun 6 can be determined, while painting.

Further, the painting work which has been performed by a skillful operator for one workpiece can be automatically performed for a large number of workpieces of the same specification.

Further, by the operator 11 moving the indicator 2 as if he/she moves the paint gun 6, while operating the injection of the paint from the paint gun 6 by using the indicator 2, he/she can paint the workpiece, as if he/she actually holds the paint gun 6 in the hand and paints.

### {Modification 1}

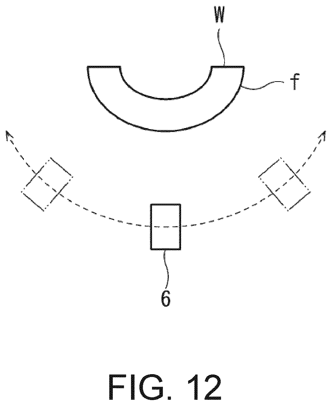

Fig. 12 is a plan view illustrating one example of the contents of a specific control of Modification 1. Referring to Fig. 1, in Modification 1, the to-be-painted surface f of the workpiece W is a curved surface, for example. Further, the system controller 3 performs the fixed gun distance control and the gun vertical-to-surface control as the specific controls. Other configurations are the same as Embodiment 1.

Modification 1 also acquires the same effects as Embodiment 1. Further, the shape of the to-be-painted surface f of the workpiece W is not limited in particular, as clear from Embodiment 1 and Modification 1.

### (Embodiment 2)

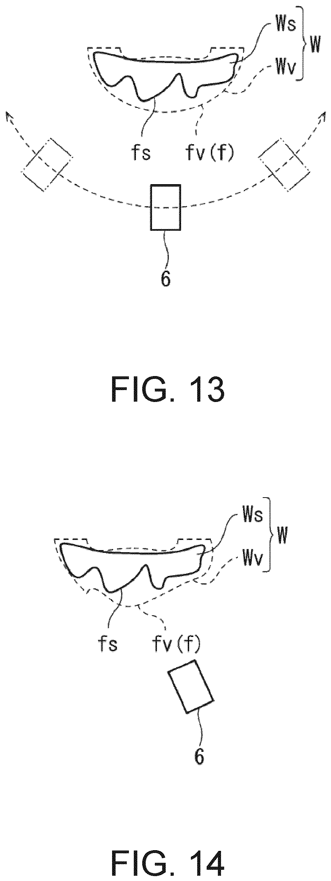

Fig. 13 is a plan view illustrating one example of the contents of a specific control of Embodiment 2. Referring to Fig. 13, in Embodiment 2, an imaginary workpiece Wv is set for an actual workpiece Ws. The actual workpiece Ws includes a coarse to-be-painted surface fs. The imaginary workpiece Wv is set so that it includes an imaginary to-be-painted surface fv which is obtained by smoothening the to-be-painted surface fs of the actual workpiece Ws, and a part other than the imaginary to-be-painted surface fv follows the surface of the actual workpiece Ws. Therefore, the "workpiece W" exists as the concept embracing the actual workpiece Ws and the imaginary workpiece Wv. This "to-be-painted surface" of the "workpiece W" is referred to as a "control to-be-painted surface f." Therefore, in Embodiment 1 and Modification 1, the to-be-painted surface of the actual workpiece W is the control to-be-painted surface f.

The imaginary workpiece Wv is identified, for example, by CAD data, and is stored in the memory device 7 as three-dimensional data. Then, the system controller 3 performs the fixed gun distance control and the gun vertical-to-surface control as the specific controls by using the imaginary to-be-painted surface fv as the control to-be-painted surface f. Other configurations are the same as Embodiment 1.

In a case where the actual to-be-painted surface fs of the actual workpiece Ws is coarse, when the first control or the second control is performed based on the distance or the angle of the paint gun 6 with respect to the actual to-be-painted surface fs, the position and the posture of the paint gun 6 may become disturbed because they become unable to follow the state of the actual to-be-painted surface fs, and therefore, a desirable painting state may not be acquired.

According to Embodiment 2, since the imaginary to-be-painted surface fv which is obtained by smoothening the actual to-be-painted surface fs is set to the workpiece W, and the first control or the second control is then performed to the imaginary to-be-painted surface fs, the position and the posture of the paint gun 6 can follow the state of the imaginary to-be-painted surface fs, and therefore, it can be prevented that the position and the posture of the paint gun 6 are disturbed.

### {Modification 2}

Fig. 14 is a plan view illustrating one example of the contents of a specific control of Modification 2. Referring to Fig. 14, in Modification 2, the imaginary to-be-painted surface fv of the imaginary workpiece Wv is not only set to the shape which is obtained by smoothening the actual to-be-painted surface fs of the actual workpiece Ws, but also set in the second control so that the paint is sprayed onto the actual to-be-painted surface fs by the paint gun 6 from a desired direction. In detail, the imaginary to-be-painted surface fv is set so that the normal line of the imaginary to-be-painted surface fv is oriented to the desired direction. Other configurations are the same as those of Embodiment 2.

According to Modification 2, since the paint is sprayed onto the actual to-be-painted surface fs by the paint gun 6 from the desired direction, a desired painting state can be acquired.

### (Other Embodiments)

In the above embodiment, by omitting the record mode and the reproduction mode, the painting robot system 100 may be configured so as to include only a normal operation mode similar to the record mode except for not storing the robot control signal and the paint gun control signal.

In the above embodiment, the releasing may be other than painting. Such releasing includes, for example, washing by injection of washing fluid from a washing nozzle, shot blast or shot peening by injection of mixture of blast material grain and air or water from the injection nozzle, arc welding by discharge of current from electrodes, or flaming by discharge of flame from a burner.

In the above embodiment, the operation terminal 8 in which the commander and the sensor part are integrated may be used. Such an operation terminals 8 includes a joystick, a master robotic arm having the shape similar to the robot 1, and an operation terminal for exclusive use, etc.

The system controller may be configured so that at least either one of the fixed EF distance control or the EF vertical-to-surface control may be performed, while the operation terminal is operated so that the end effector releases the substance or the energy.

According to this configuration, when the end effector does not release the substance or the energy, the end effector can be moved with at least either one of a free traveling path or a free posture.

### (Effects by Embodiments)

As explained above, in above-described Embodiments 1 and 2, the robot system 100 includes the robot 1 including the end effector 6, the operation unit 8, the controller 3 which moves the end effector 6 based on operation of the operation unit 8 and causes the end effector 6 to perform processing to the to-be-processed surface of the workpiece W in a contactless manner. When moving the end effector 6 based on the operation of the operation unit 8, the controller 3 performs at least either one of the first control in which the distance between the end effector 6 and the control to-be-processed surface f, which is the to-be-processed surface fs of the workpiece W or the imaginary to-be-processed surface fv of the workpiece W, is constant, or the second control in which the angle of the end effector 6 with respect to the control to-be-processed surface f is constant.

According to this configuration, it is possible to move the end effector 6 based on the operation of the operation unit 8 and cause the end effector 6 to perform the processing to the to-be-processed surface fs of the workpiece W in the contactless manner, while performing at least either one of the first control or the second control. Thus, the traveling path of the end effector 6 can be determined, while confirming the actual processing state to the workpiece W by the at least either one of the first control or the second control. As a result, a desirable processing state for the operator 11 can be obtained. Therefore, the actual processing state is improved as compared to a case where at least either one of the first control or the second control is performed while moving the end effector 6 with a path set beforehand.

The controller 3 may perform at least either one of the first control or the second control, while the end effector 6 performs the processing to the to-be-processed surface fs of the workpiece W.

According to this configuration, when the end effector 6 does not perform the processing to the to-be-processed surface fs of the workpiece W, the end effector 6 can be moved with at least either one of a free traveling path or a free posture.

The operation unit 8 may include the position/posture commander 2 which indicates the position and the posture of the end effector 6, the position/posture detector 4 which detects the position and the posture of the position/posture commander 2, and the processing commander 2a which manipulates the processing.

According to this configuration, the position and the posture of the end effector 6 correspond to the position and the posture of the position/posture commander 2 detected by the position/posture detector 4, while the processing by the end effector 6 is controlled corresponding to the operation of the processing commander 2a. Thus, by the operator 11 moving the position/posture commander 2 as if he/she moves the end effector 6, while operating the processing by the end effector 6 by using the processing commander 2a, he/she can perform the processing to the workpiece W, as if he/she actually holds the end effector 6 in the hand and performs the processing.

The controller 3 may store the three-dimensional data of the workpiece W. The controller 3 may perform the first control based on the three-dimensional data of the workpiece W and the position of the end effector 6, or performs the second control based on the three-dimensional data of the workpiece W and the posture of the end effector 6. Here, "the three-dimensional data" includes, for example, CAD data, actual measurement data, etc.

According to this configuration, the first control and the second control can be performed by the calculation using the three-dimensional data of the workpiece W.

The position of the end effector 6 and the posture of the end effector 6 used for the first control and the second control may be the position and the posture of the position/posture commander 2 detected by the position/posture detector 4, respectively. The control to-be-processed surface f in the first control and the second control may be the imaginary to-be-processed surface fv of the workpiece W.

In a case where the actual to-be-processed surface fs of the workpiece W is coarse, when the first control or the second control is performed based on the distance or the angle of the end effector 6 with respect to the actual to-be-processed surface fs, the position and the posture of the end effector 6 may become disturbed because they become unable to follow the state of the actual to-be-processed surface fs, and therefore, a desirable processing state may not be acquired. According to this configuration, for example, when the imaginary to-be-processed surface fv which is obtained by smoothening the actual to-be-processed surface fs is set to the workpiece W, the first control or the second control is then performed to the imaginary to-be-processed surface fs. Thus, the position and the posture of the end effector 6 can follow the state of the imaginary to-be-processed surface fs, and therefore, it can be prevented that the position and the posture of the end effector 6 are disturbed.

The robot system 100 may further include the memory 7 which stores the control signal outputted from the controller 3 to move the end effector 6 and cause the end effector 6 to perform the processing. The controller 3 may include the record mode and the reproduction mode. The controller 3 may store the control signals in the memory 7 in a time-series manner in the record mode, and output the control signals stored in the memory 7 to the robot 1 and the end effector 6 in the reproduction mode.

According to this configuration, in the record mode, a skillful operator 11 performs the processing to one workpiece W, and then, in the reproduction mode, the processing can be automatically performed same as performed by the skillful operator 11 for a large number of workpieces W of the same specification.

The controller 3 may perform at least either one of the first control or the second control, when the end effector 6 is located within the given distance range from the control to-be-processed surface f, and the direction of the end effector 6 with respect to the control to-be-processed surface f is within the given direction range.

If the end effector 6 is located greatly away from the to-be-processed surface fs of the workpiece W, or is directed greatly away from the to-be-processed surface fs of the workpiece W, it is assumed that the operator 11 has no intention to perform the first control or the second control. According to this configuration, in such a case, the intention of the operator 11 is suitably respected.

The processing by the end effector 6 may be processing by release of substance or energy for processing from the end effector 6 to the to-be-processed surface of the workpiece.

According to this configuration, in the processing by release of the substance or the energy for processing from the end effector 6 to the to-be-processed surface fs of the workpiece W, a desirable processing state for the operator 11 can be obtained.

The processing by release of the substance or the energy for processing from the end effector 6 to the to-be-processed surface fs of the workpiece W may be one of processings including painting by injection of liquidous or powdery paint from a paint gun, washing by injection of washing fluid from a washing nozzle, shot blast or shot peening by injection of mixture of blast material grain and air or water from an injection nozzle, arc welding by discharge of current from electrodes, and flaming by discharge of flame from a burner.

According to this configuration, in these processings, a desirable processing state for the operator 11 can be obtained.

It is apparent for the person skilled in the art that many improvements and other embodiments are possible from the above description. Therefore, the above description is to be interpreted only as illustration.

### DESCRIPTION OF REFERENCE CHARACTERS

- 1: Robot
- 1a: EF Attaching Part
- 2: Indicator
- 2a: Trigger
- 3: System Controller
- 4: Position/Posture Sensor
- 5: Specific Control Switch
- 6: Paint Gun
- 7: Memory Device
- 8: Operation Terminal
- 9: Robot Controller 9
- 10: Paint
- 21: Correction Permitted Position Range
- 22: Correction Permitted Angle Range
- 23: Normal Line
- 31: Mode Changeover Switch
- 100: Painting Robot System
- f: To-be-painted Surface, Control To-be-painted Surface
- Lc: Given Constant Distance
- Me: Memory
- O: Origin
- P0: Position of EF Attaching Part
- P1: Intersection
- P2: Constant Distance Point
- Pr: Processor
- W: Workpiece
- θ: Angle Difference

## Claims

1. A robot system, comprising:
a robot including an end effector;
an operation unit; and
a controller that moves the end effector based on operation of the operation unit and causes the end effector to perform processing to a to-be-processed surface of a workpiece in a contactless manner,
wherein, when moving the end effector based on the operation of the operation unit, the controller performs at least either one of a first control in which a distance between the end effector and a control to-be-processed surface, that is the to-be-processed surface of the workpiece or an imaginary to-be-processed surface of the workpiece, is constant, or a second control in which an angle of the end effector with respect to the control to-be-processed surface is constant.

2. The robot system of claim 1, wherein the controller performs at least either one of the first control or the second control, while the end effector performs the processing to the to-be-processed surface of the workpiece.

3. The robot system of claim 1 or 2, wherein the operation unit includes:
a position/posture commander that indicates a position and a posture of the end effector;
a position/posture detector that detects a position and a posture of the position/posture commander; and
a processing commander that manipulates the processing.

4. The robot system of any one of claims 1 to 3, wherein the controller stores three-dimensional data of the workpiece, and
wherein the controller performs the first control based on the three-dimensional data of the workpiece and the position of the end effector, or performs the second control based on the three-dimensional data of the workpiece and the posture of the end effector.

5. The robot system of claim 4, wherein the position of the end effector and the posture of the end effector used for the first control and the second control are the position and the posture of the position/posture commander detected by the position/posture sensing part, respectively, and
wherein the control to-be-processed surface in the first control and the second control is an imaginary to-be-processed surface of the workpiece.

6. The robot system of any one of claims 1 to 5, further comprising a memory that stores a control signal outputted from the controller to move the end effector and cause the end effector to perform the processing,
wherein the controller includes a record mode and a reproduction mode, and
wherein the controller stores the control signals in the memory in a time-series manner in the record mode, and outputs the control signals stored in the memory to the robot and the end effector in the reproduction mode.

7. The robot system of any one of claims 1 to 6, wherein the controller performs at least either one of the first control or the second control, when the end effector is located within a given distance range from the control to-be-processed surface, and a direction of the end effector with respect to the control to-be-processed surface is within a given direction range.

8. The robot system of any one of claims 1 to 7, wherein the processing by the end effector is processing by release of substance or energy for processing from the end effector to the to-be-processed surface of the workpiece.

9. The robot system of claim 8, wherein the processing by release of the substance or the energy for processing from the end effector to the to-be-processed surface of the workpiece is one of processings including:
painting by injection of liquidous or powdery paint from a paint gun;
washing by injection of washing fluid from a washing nozzle;
shot blast or shot peening by injection of mixture of blast material grain and air or water from an injection nozzle;
arc welding by discharge of current from electrodes; and
flaming by discharge of flame from a burner.

10. A method of controlling a robot system including a robot including an end effector, and an operation unit, comprising the steps of:
moving the end effector based on operation of the operation unit, and causing the end effector to perform processing to a to-be-processed surface of a workpiece in a contactless manner; and
performing, when moving the end effector, at least either one of a first control in which a distance between the end effector and a control to-be-processed surface, that is the to-be-processed surface of the workpiece or an imaginary to-be-processed surface of the workpiece, is constant, or a second control in which an angle of the end effector with respect to the control to-be-processed surface is constant.
